# FASCICULE DE BREVET EUROPEEN

(11) **EP 1 767 797 B1**
(45) Date de publication et mention de la délivrance du brevet: **28.04.2010**
(21) Numéro de dépôt: 06291466.8
(22) Date de dépôt: 19.09.2006
(51) Int. Cl.: F16C 23/08, F16C 27/04, B62D 5/04, F16H 7/14

(54) **Mécanisme de direction assistée pour véhicule**
Servolenkung für ein Kraftfahrzeug
Power assisted steering mechanism for a vehicle

(30) Priorité: 21.09.2005 FR 0509641
(43) Date de publication de la demande: 28.03.2007
(73) Titulaire: Aktiebolaget SKF, 415 50 Göteborg (SE)
(72) Inventeur: Paradis, Marc, 91540 Echarcon (FR); Petit, Régis, 37330 Courcelles de Touraine (FR)
(74) Mandataire: Casalonga, Axel

(56) Documents cités:
- EP-A- 0 355 656
- EP-A- 1 457 405
- EP-A- 1 871 653

## Description

La présente invention concerne le domaine des mécanismes de direction assistée pourvus de boîtiers supports utilisés dans des montages où le roulement est soumis à des efforts qui tendent à le faire basculer suivant un nouvel axe de rotation faisant un angle non nul avec l'axe de rotation initial, et des boîtiers de support de paliers

Dans un autre domaine, le document EP 0 355 656 (Union Carbide) décrit un système de support de roulement pour machine à haute vitesse flexible axialement mais ne permettant pas un basculement de la couronne intérieure par rapport à la couronne extérieure.

Le document EP 1871653 A qui est considéré comme compris dans l'état de la technique selon l'article 54(3) CBE décrit un autre mécanisme de direction assistée.

Le phénomène de basculement se retrouve notamment dans les dispositifs de direction assistée tels que décrits par le document EP 1 457 405 (ZF Lenk Systeme) qui décrit un mécanisme selon le préambule de la revendication 1 dans lequel le moteur d'assistance équipé d'une poulie menante entraîne par l'intermédiaire d'une courroie une poulie menée fixée rigidement sur l'écrou d'une vis à billes, destinée à transformer le couple de rotation exercé par le moteur sur l'écrou de la vis à billes en un déplacement linéaire et un effort axial d'assistance sur une barre de commande comportant la crémaillère et la vis de la vis à billes. La vis à billes est montée centrée dans un carter supportant également le moteur par l'intermédiaire d'un roulement dont la bague extérieure est fixée dans le carter et la bague intérieure est montée serrée sur une portée cylindrique extérieure de l'écrou.

Les mouvements respectifs des éléments doivent se faire avec des jeux de fonctionnement extrêmement réduits afin de ne pas perturber un fonctionnement fiable et réactif du système d'assistance de direction, notamment lors des changements de sens de braquage du volant. Le roulement monté autour de la vis à billes doit donc avoir un très faible jeu interne, en particulier un très faible jeu axial. Lors des manoeuvres de la colonne de direction par le conducteur et du braquage des roues, la barre d'orientation sur laquelle sont usinées la vis et la crémaillère reprend par ses extrémités non seulement des efforts axiaux mais aussi des efforts radiaux importants qui sont transmis à la bague intérieure du roulement par l'écrou de la vis à billes et tendent à exercer sur le roulement supportant l'écrou de la vis à billes un moment de basculement tendant à incliner le roulement suivant un nouvel axe de rotation.

Selon les dispositifs de l'art antérieur, le roulement est monté de façon rigide dans le carter. Il en résulte que les efforts de dévers exercés sur le roulement à faible jeu interne tendent à faire travailler les billes du roulement sous une forte charge et en-dehors de l'angle de contact normal, ce qui peut conduire à abréger de façon non négligeable la durée de vie du roulement. Un montage trop rigide peut également avoir une influence néfaste sur la durée de vie de la vis à billes.

L'invention vise à remédier aux inconvénients précités.

L'invention propose un mécanisme de direction assistée selon la revendication 1.

Le mécanisme de direction assistée pour véhicule comprend une barre de commande, une vis à billes pourvue de billes coopérant avec une portion filetée de la barre et d'un écrou, une poulie fixée en rotation d'écrou et un palier à roulement comprenant un boîtier et un roulement pourvu d'une bague intérieure montée sur l'écrou et d'une bague extérieure. Le roulement est monté dans le boîtier par la bague extérieure. Le boîtier comprend deux couronnes sensiblement annulaires intersectant au moins un plan radial commun et deux éléments de liaison entre lesdites couronnes. La couronne intérieure loge la bague extérieure du roulement et la couronne extérieure est destinée au montage dans un support extérieur. La couronne extérieure est de longueur axiale inférieure à la couronne intérieure. Les éléments de liaison autorisent un basculement autour de la couronne intérieure par rapport à la couronne extérieure autour d'un axe passant par les éléments de liaison par déformation élastique, les couronnes étant séparées par des ouvertures étendues circonférentiellement jusqu'aux éléments de liaison. Ainsi, le dispositif conserve une excellente rigidité axiale tandis que le basculement par déformation élastique des éléments de liaison est obtenu pour un angle relativement faible, notamment inférieur à 1 ° et préférablement inférieur à 30 secondes. Les éléments de liaison forment un moyen de basculement par rapport à un axe sensiblement perpendiculaire à l'axe du palier à roulement.

Avantageusement, les éléments de liaisons sont diamétralement opposés. L'axe de la couronne intérieure et l'axe de la couronne extérieure se croisent sensiblement dans un plan radial passant par les éléments roulants.

Avantageusement, les éléments de liaison sont monoblocs avec les couronnes. Les éléments de liaison peuvent ainsi conserver la rigidité axiale suffisante et le boîtier peut être fabriqué par moulage de façon économique.

Dans un mode de réalisation, les ouvertures sont limitées circonférentiellement par les surfaces incurvées.

Dans un mode de réalisation, la couronne intérieure comprend une portion radiale et une portion axiale. La portion radiale peut servir de butée à la bague extérieure de roulement dans un sens. La bague extérieure peut être fixée à la couronne intérieure, notamment dans l'autre sens, par au moins une déformation plastique d'une extrémité axiale de la couronne intérieure. La zone déformée plastiquement peut être continue circonférentiellement ou comprendre une pluralité de points de déformation.

Dans un mode de réalisation, la couronne extérieure comprend une portion radiale.

Les éléments de liaison autorisent un léger basculement sous charge de la couronne intérieure par rapport à la couronne extérieure autour d'un axe passant par les éléments de liaison par déformation élastique, les couronnes étant séparées par des ouvertures étendues circonférentiellement jusqu'aux éléments de liaison. On évite ainsi sur le roulement et la vis à billes l'apparition de contraintes excessives, notamment au niveau du contact entre les éléments roulants et les chemins de roulement.

Le mécanisme de direction assistée présente par voie de conséquence, une durée de vie prolongée. L'extension de la durée de vie du roulement et de la vis à billes évite leur remplacement, ce qui s'avère particulièrement économique à l'utilisation.

La présente invention sera mieux comprise à la lecture de la description détaillée d'un mode de réalisation pris à titre d'exemple nullement limitatif et illustré par les dessins annexés, sur lesquels :
- la figure 1 est une vue schématique générale d'un mécanisme de direction assistée pour véhicule ;
- la figure 2 est une vue en coupe axiale du dispositif de palier à roulement monté dans le carter de l'assistance de direction ;
- la figure 3 est une vue de face en élévation du dispositif de palier à roulement ;
- la figure 4 est une vue en coupe axiale correspondant à la figure 3 ;
- la figure 5 est une vue en perspective et en écorché correspondant aux figures 3 et 4 ;
- la figure 6 est une vue schématique en élévation montrant les possibilités de basculement du roulement.

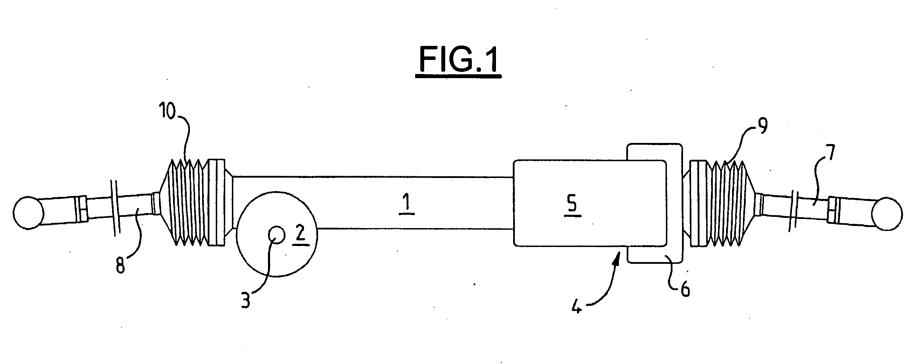

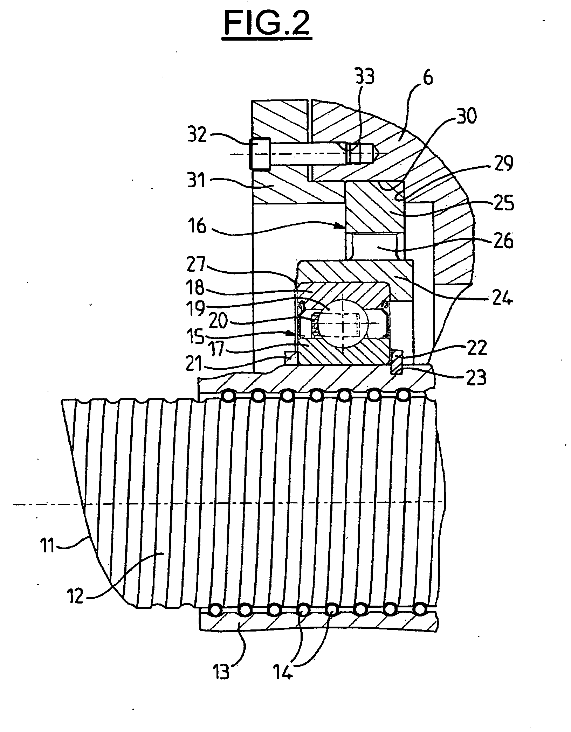

Comme on peut le voir sur la figure 1, un système d'orientation des roues avant d'un véhicule comprend un tube carter de crémaillère 1 dans lequel est disposée une barre de commande à crémaillère visible sur la figure 2. Le tube carter de crémaillère 1 est associé à un boîtier 2 de pignon de crémaillère dans lequel est disposé un arbre 3. L'arbre 3 transmet un mouvement de rotation en provenance du volant (non représenté) du véhicule. Du côté opposé du tube carter 1 est monté un dispositif d'assistance 4 comprenant un moteur 5 et un carter 6. A chaque extrémité longitudinale du tube carter 1 est prévue une biellette 7, 8 reliée chacune à une extrémité de la barre de commande et assurant la transmission du mouvement linéaire de la barre de commande aux roues du véhicule. La liaison entre la barre de commande et la biellette 7, 8 est assurée par une liaison à rotule protégée par un soufflet 9, 10.

Comme on peut le voir sur la figure 2, le mécanisme d'assistance de direction comprend la barre de commande 11 pourvue sur la portion représentée d'une surface extérieure filetée 12 pour former une vis à billes, un écrou 13 disposé autour de la vis à billes et une pluralité de billes 14 disposées entre l'écrou 13 et la surface filetée 12. L'écrou 13 se présente sous la forme générale d'un manchon tubulaire pourvu d'un alésage fileté et d'une surface extérieure sensiblement axiale sur laquelle est monté un palier à roulement 15 supporté par un boîtier 16 solidaire du carter 6. Le roulement 15 peut être un roulement de type standard à bagues massives à gorges profondes usinées par enlèvement de copeaux.

Plus précisément, le roulement 15 comprend une bague intérieure 17 dont l'alésage est monté, par exemple emmanché, sur l'écrou 13, une bague extérieure 18, une rangée d'éléments roulants 19, ici les billes, disposées entre les bagues 17 et 18 et une cage 20 maintenant un espacement circonférentiel des éléments roulants 19. La surface extérieure de la bague intérieure 17 et la surface intérieure de la bague extérieure 18 sont pourvues de chemins de roulement, par exemple de forme toroïdale ou préférablement ogivale. Les bagues 17 et 18 sont délimitées par des surfaces frontales sensiblement radiales coplanaires. Des flasques d'étanchéité ou des joints peuvent être supportés par la bague extérieure 18 et coopérer avec la bague intérieure 17. La position axiale de la bague intérieure 17 par rapport au manchon 13 peut être déterminée d'un côté par un élément 21 fixé rigidement sur l'écrou 13 et de l'autre côté par un circlips 22 disposé dans une rainure 23 de l'écrou 13 .

Le boîtier 16 comprend une couronne intérieure 24 annulaire à section en L, une couronne extérieure 25 à section rectangulaire et des éléments de liaison 26 disposés entre les couronnes intérieure 24 et extérieure 25. La couronne 24 comprend une portion axiale de longueur supérieure à celle de la bague extérieure 18 et une portion radiale s'étendant vers l'intérieur à partir de la portion axiale et formant une butée axiale pour l'une des surfaces frontale de la bague extérieure 18. La couronne intérieure 24 comprend en outre un rebord 27 formant une butée axiale pour l'autre surface frontale de la bague extérieure 18. Le rebord 27 peut être circonférentiellement continu ou discontinu et formé par déformation de matière de l'extrémité de la portion axiale de la couronne intérieure 24, par exemple par repoussage de matière. La bague extérieure 18 et la couronne extérieure 24 sont ainsi convenablement fixées l'une à l'autre.

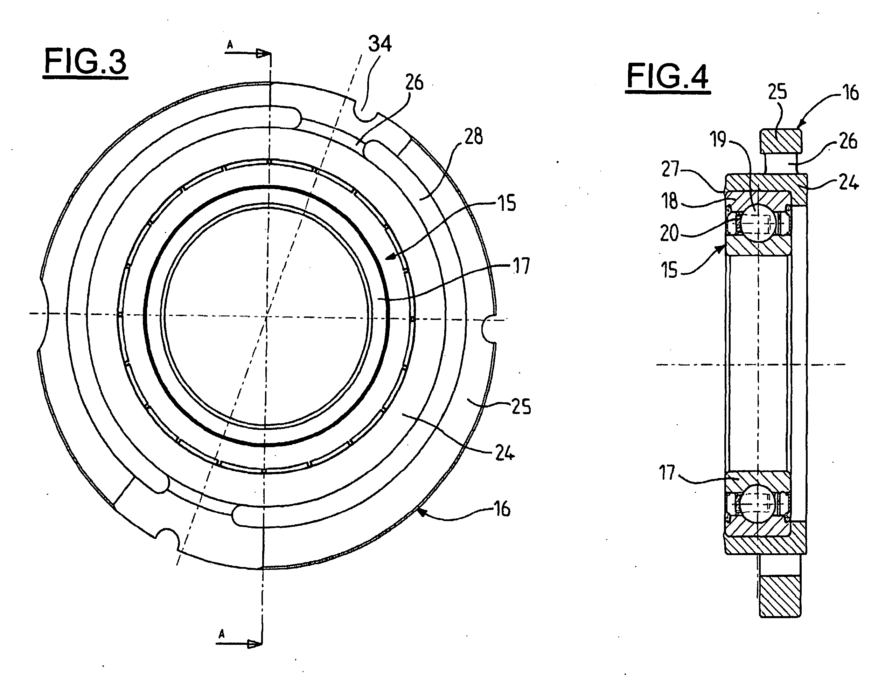

Un espace radial relativement important subsiste entre la surface extérieure de la couronne intérieure 24 et l'alésage de la couronne extérieure 25. La dimension radiale dudit espace peut être supérieure à la dimension radiale de la portion axiale de la couronne intérieure 24. Comme on peut le voir sur la figure 3, les couronnes intérieure 24 et extérieure 25 sont séparées par deux ouvertures 28 délimitées par deux éléments de liaison 26 ici diamétralement opposés. Les extrémités des ouvertures 28 sont arrondies. Le boîtier 16 est avantageusement réalisé de façon monobloc, par exemple en acier moulé ou encore en alliage léger. Les éléments de liaison 26 occupant un faible secteur angulaire offrent une certaine souplesse en torsion qui permet un très léger basculement de la couronne intérieure 24 par rapport à la couronne extérieure 25, par exemple de l'ordre de quelques minutes à quelques dizaines de minutes d'angle. La faible section des éléments de liaison 26 facilite le basculement. De façon avantageuse, la position diamétrale opposée des éléments de liaison 26 permet de mieux déterminer la position géométrique de l'axe du basculement.

Le carter 6 comprend un épaulement 29 contre lequel une surface radiale de la couronne extérieure 25 est en appui, un alésage 30 dans lequel la couronne extérieure 25 est montée, et est associé à une bride 31 de forme générale annulaire contre laquelle l'autre surface radiale de la couronne extérieure 25 est en appui. La bride 31 est fixée au carter 6 par une pluralité de vis 32 faisant saillie dans des trous taraudés 33 du carter 6 et permettant de serrer axialement la couronne extérieure 25 entre l'épaulement 29 et la bride 31. La couronne extérieure 25 peut ainsi être fixée axialement et circonférentiellement au carter 6. Il en découle que la couronne intérieure 24 est également fixée radialement et circonférentiellement au carter 6 mais peut présenter un léger angle de rotulage en raison de l'élasticité des éléments de liaison 26. Ainsi, lorsque la barre de commande 11 subit un moment de basculement en raison de la position des roues du véhicule, un léger basculement de ladite barre de commande 11 peut s'effectuer et se transmettre par l'intermédiaire de l'écrou 13 et du roulement 15 à la couronne intérieure 24 en étant supporté par les éléments de liaison 26 du boîtier 16. On évite ainsi de faire subir au roulement 15 des charges importantes en dévers, ce qui s'avère particulièrement favorable à la réduction de l'usure.

La couronne extérieure comporte des encoches 34 permettant d'indexer angulairement le boîtier 16 lors de son montage dans le carton 6. Ceci permet d'orienter correctement le boîtier 16 par rapport à la direction des charges radiales exercées sur la barre de commande 11 afin que sous l'action desdits efforts radiaux, la couronne intérieure 24 puisse basculer légèrement par rapport à la couronne extérieure 25 autour d'une ligne joignant les éléments de liaison 26.

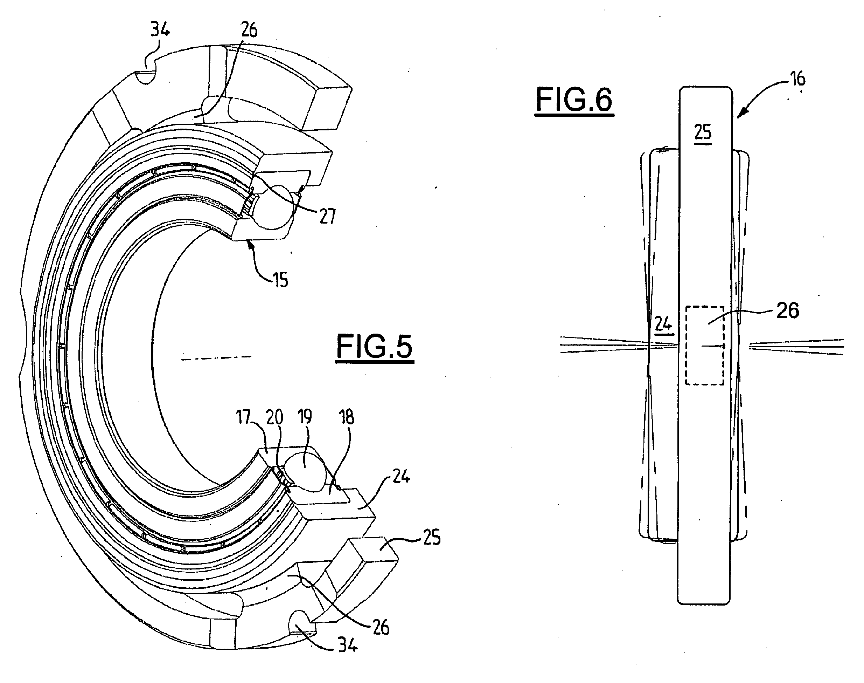

La couronne intérieure 24 peut ainsi basculer par rapport à la couronne extérieure 25 selon des positions illustrées sur la figure 6.

Pour les applications courantes, un basculement angulaire relativement faible y compris entre 10 et 20 minutes d'angle, suffit pour que le roulement puisse suivre les petits déplacements de la vis à billes dus aux efforts radiaux sur les extrémités de la crémaillère, le palier à roulement 15 conservant une grande rigidité dans le sens axial. Comme on connaît l'orientation générale des efforts radiaux exercés sur les extrémités de la barre 11 supportée par le palier à roulement 15, il est possible d'orienter en conséquence le boîtier flexible 16 de telle sorte que la ligne joignant les éléments de liaison 26 soit sensiblement perpendiculaire à l'orientation desdits efforts radiaux. Cela est le cas dans des dispositifs de direction assistée.

Avantageusement, le palier à roulement 15 peut être pourvu de gorges à quatre points de contact présentant un profil en ogive sur les deux bagues ou à trois points de contact présentant un profil en ogive sur une bague et un profil à rayon constant sur l'autre bague afin d'accroître la rigidité axiale.

La longueur axiale de l'écrou 13 étant nettement supérieure à celle du palier à roulement 15, il subsiste sur la surface extérieure de l'écrou 13 une surface libre sur laquelle on peut venir fixer une poulie menée (non représentée) pour l'entraînement de l'écrou 13. La poulie peut être menée par une courroie d'entraînement également en prise sur une poulie menante solidaire d'un arbre du moteur 5 comme cela est illustré sur les figures 2 et 3 du document EP 1 457 405.

Grâce à l'invention, on dispose d'un boîtier présentant deux couronnes disposées l'une à l'intérieur de l'autre présentant un encombrement axial réduit dans la mesure où la couronne extérieure est de longueur axiale inférieure à la couronne intérieure et disposée par rapport à ladite couronne intérieure de telle sorte que l'encombrement axial est défini par la couronne intérieure. Les couronnes intérieure et extérieure peuvent être concentriques ou légèrement décentrées. Les deux couronnes présentent une grande rigidité axiale en ce sens qu'un effort axial exercé sur le pourtour de la couronne intérieure aura une influence quasi négligeable sur la position de la couronne intérieure par rapport à la couronne extérieure. En outre, les deux couronnes présentent une certaine liberté de basculement élastique l'une par rapport à l'autre de telle sorte qu'un moment de basculement appliqué à la couronne intérieure selon un axe passant sensiblement par les éléments de liaison reliant les couronnes provoque une déformation desdits éléments de liaison dans le domaine élastique et un décalage angulaire entre l'axe de la couronne intérieure et l'axe de la couronne extérieure, par exemple d'un angle inférieur à 1°. Le boîtier 16 rigide axialement et souple en basculement est particulièrement bien adapté pour les mécanismes de direction, notamment de direction assistée dans lesquels la crémaillère est susceptible de subir des efforts radiaux importants à ses extrémités se traduisant au niveau de l'écrou par un moment de basculement.

On évite ainsi l'apparition de contraintes locales excessives sur le roulement et sur la vis à billes, notamment au niveau des zones de contact avec les éléments roulants avec pour voie de conséquence une amélioration de la fiabilité et de la durée de vie du système.

## Revendications

1. Mécanisme de direction assistée pour véhicule, comprenant une barre de commande (11), une vis à billes pourvue de billes (14) coopérant avec une portion filetée de la barre et d'un écrou (13), et un palier à roulement comprenant un boîtier (16) et un roulement pourvu d'une bague intérieure (17) montée sur l'écrou et d'une bague extérieure (18), ledit roulement étant monté dans le boîtier par la bague extérieure, **caractérisé par le fait que** le boîtier comprend deux couronnes (24, 25) sensiblement annulaires intersectant au moins un plan radial commun et deux éléments de liaison (26) entre lesdites couronnes, la couronne intérieure (24) logeant la bague extérieure du roulement, la couronne extérieure (25) étant destinée au montage dans un support extérieur, la couronne extérieure (25) étant de longueur axiale inférieure à la couronne intérieure (24), les éléments de liaison (26) autorisant un basculement de la couronne intérieure par rapport à la couronne extérieure autour d'un axe passant par les éléments de liaison par déformation élastique, les couronnes étant séparées par des ouvertures (28) étendues circonférentiellement jusqu'aux éléments de liaison.

2. Mécanisme selon la revendication 1, dans lequel le basculement par déformation élastique est inférieur à 1°, préférablement 30'.

3. Mécanisme selon l'une quelconque des revendications précédentes, dans lequel les éléments de liaison sont diamétralement opposés.

4. Mécanisme selon l'une quelconque des revendications précédentes, dans lequel les éléments de liaison sont monoblocs avec les couronnes.

5. Mécanisme selon l'une quelconque des revendications précédentes, dans lequel les ouvertures sont limitées circonférentiellement par des surfaces incurvées.

6. Mécanisme selon l'une quelconque des revendications précédentes, dans lequel la couronne intérieure comprend une portion radiale et une portion axiale.

7. Mécanisme selon l'une quelconque des revendications précédentes, dans lequel la couronne extérieure comprend une portion radiale.

8. Mécanisme selon l'une quelconque des revendications précédentes, dans lequel la bague extérieure est fixée à la couronne intérieure par au moins une déformation plastique (27) d'une extrémité axiale de la couronne intérieure.

## Claims

1. Power-assisted steering mechanism for a vehicle, comprising a control rod (11), a ball screw provided with balls (14) collaborating with a threaded portion of the rod and with a nut (13), and a rolling bearing comprising a housing (16) and a bearing provided with an inner race (17) mounted on the nut and an outer race (18), the said bearing being mounted in the housing via the outer race, **characterized in that** the housing comprises two substantially annular rings (24, 25) intersecting at least one common radial plane and two connecting elements (26) connecting the said rings together, the inner ring (24) housing the outer race of the bearing, the outer ring (25) being intended for mounting in an external support, the outer ring (25) being of a shorter axial length than the inner ring (24), the connecting elements (26) allowing the inner ring to tilt relative to the outer ring about an axis passing through the connecting elements through elastic deformation, the rings being separated by openings (28) extending circumferentially as far as the connecting elements.

2. Mechanism according to Claim 1, in which the tilting through elastic deformation is less than 1°, preferably 30'.

3. Mechanism according to any one of the preceding claims, in which the connecting elements are diametrically opposed.

4. Mechanism according to any one of the preceding claims, in which the connecting elements are of one piece with the rings.

5. Mechanism according to any one of the preceding claims, in which the openings are circumferentially bounded by curved surfaces.

6. Mechanism according to any one of the preceding claims, in which the inner ring comprises a radial portion and an axial portion.

7. Mechanism according to any one of the preceding claims, in which the outer ring comprises a radial portion.

8. Mechanism according to any one of the preceding claims, in which the outer race is fixed to the inner ring via at least one plastic deformation (27) of an axial end of the inner ring.

## Patentansprüche

1. Servolenkmechanismus für ein Fahrzeug, der eine Lenkstange (11), eine Kugelspindel, die mit Kugeln (14) versehen ist, die mit einem Gewindebereich der Stange und einer Mutter (13) zusammenwirken, und eine Wälzlagerung aufweist, die ein Gehäuse (16) und ein Wälzlager besitzt, das mit einem Innenring (17), der auf der Mutter montiert ist, und einem Außenring (18) versehen ist, wobei das Wälzlager mit dem Außenring in dem Gehäuse montiert ist, **dadurch gekennzeichnet, dass** das Gehäuse zwei etwa ringförmige Kranzelemente (24, 25), die sich in wenigstens einer gemeinsamen radialen Ebene schneiden, und zwei Verbindungselemente (26) zwischen den Kranzelementen aufweist, wobei das innere Kranzelement (24) den äußeren Ring des Wälzlagers aufnimmt, das äußere Kranzelement (25) zur Montage an einer äußeren Abstützung bestimmt ist, das äußere Kranzelement (25) eine kleinere axiale Länge als das innere Kranzelement (24) besitzt, die Verbindungselemente (26) ein Kippen des inneren Kranzelements in Bezug auf das äußere Kranzelement um eine durch die Verbindungselemente verlaufende Achse durch elastische Deformation erlauben und die Kranzelemente durch Öffnungen (28) getrennt sind, die sich in Umfangsrichtung bis zu den Verbindungselementen erstrecken.

2. Mechanismus nach Anspruch 1, bei welchem das Kippen durch elastische Deformation unterhalb von 1°, vorzugsweise 30' liegt.

3. Mechanismus nach einem der vorhergehenden Ansprüche, bei welchem die Verbindungselemente sich diametral gegenüber liegen.

4. Mechanismus nach einem der vorhergehenden Ansprüche, bei welchem die Verbindungselemente einstückig mit den Kranzelementen ausgebildet sind.

5. Mechanismus nach einem der vorhergehenden Ansprüche, bei welchem die Öffnungen in Umfangsrichtung durch gekrümmte Flächen begrenzt sind.

6. Mechanismus nach einem der vorhergehenden Ansprüche, bei welchem das innere Kranzelement einen Radialbereich und einen Axialbereich aufweist.

7. Mechanismus nach einem der vorhergehenden Ansprüche, bei welchem das äußere Kranzelement einen Radialbereich aufweist.

8. Mechanismus nach einem der vorhergehenden Ansprüche, bei welchem der Außenring an dem inneren Kranzelement mittels wenigstens einer plastischen Formänderung (27) eines axialen Endes des inneren Kranzelements befestigt ist.
